# EUROPÄISCHE PATENTSCHRIFT

(11) **EP 0 510 623 B1**
(45) Veröffentlichungstag und Bekanntmachung des Hinweises auf die Patenterteilung: **11.01.1995**
(21) Anmeldenummer: 92106910.0
(22) Anmeldetag: 23.04.1992
(51) Int. Cl.: B24B 3/08, B23Q 33/00, B24B 3/58

(54) **Nachschleifmaschine**
Resharpening machine
Machine de réaffutage

(30) Priorität: 25.04.1991 DE 4113451
(43) Veröffentlichungstag der Anmeldung: 28.10.1992
(73) Patentinhaber: Michael Weinig Aktiengesellschaft, D-97941 Tauberbischofsheim (DE)
(72) Erfinder: Kurz, Rainer, W-6970 Lauda-Königshofen (DE)
(74) Vertreter: Kohl, Karl-Heinz

(56) Entgegenhaltungen:
- EP-A- 0 018 244
- EP-A- 0 386 251
- CH-A- 245 453
- US-A- 2 477 135
- US-A- 4 026 073

## Beschreibung

Die Erfindung betrifft eine Nachschleifmaschine nach dem Oberbegriff des Anspruches 1.

Es ist bekannt, Profilmesser eines Werkzeuges, das beispielsweise in einer Kehlmaschine eingesetzt wird, mit einer Schleifscheibe nachzuschleifen, wenn die Profilmesser stumpf geworden sind (US-A-4 026 073). Um das Messerprofil genau nachschleifen zu können, wird eine Schablone verwendet, deren Profil genau dem Profil des nachzuschleifenden Messers entspricht. Das Werkzeug mit den nachzuschleifenden Messern und die Schablone werden am Werkzeugträger und am Schablonenhalter befestigt. Anschließend werden das jeweils nachzuschleifende Messer und die Schablone an die Schleifscheibe und an den Kopierfinger der Kopiereinheit angelegt. Anschließend wird der Support mit dem Antrieb in Richtung der Schleifscheibenachse verfahren. Durch die quer zur Schleifscheibenachse wirkende Kraft werden das Messer und die Schablone fest gegen die Schleifscheibe bzw. den Kopierfinger gedrückt, so daß das Schleifscheibenprofil einwandfrei abgefahren und das Messerprofil durch Nachschleifen genau hergestellt werden. Mit dieser bekannten Nachschleifmaschine lassen sich allerdings nicht sämtliche Messerprofile zuverlässig nachschleifen. Haben die Messerprofile Abschnitte mit größeren Steigungen, dann tritt das Problem auf, daß sich der Kopierfinger in der Schablone verhakt, so daß ein genaues Nachschleifen des Messerprofiles nicht mehr möglich ist und Bauteile, zum Beispiel der Kopierfinger, zerstört werden.

Der Erfindung liegt die Aufgabe zugrunde, die gattungsgemäße Nachschleifmaschine so auszubilden, daß auch Profilabschnitte mit größeren Steigungswinkeln einwandfrei vollautomatisch nachgeschliffen werden können.

Diese Aufgabe wird bei der gattungsgemäßen Nachschleifmaschine erfindungsgemäß mit den kennzeichnenden Merkmalen des Anspruches 1 gelöst.

Bei der erfindungsgemäßen Nachschleifmaschine wird die Vorschubgeschwindigkeit des Supports in Abhängigkeit vom Steigungswinkel des jeweils nachzuschleifenden Messerprofiles geregelt. Liegt der Kopierfinger an einem in Vorschubrichtung des Supports ansteigenden Profilabschnitt an, dann wirken auf ihn entsprechende Kräfte, die vom Kraftaufnehmer erfaßt werden. Er gibt entsprechende Schaltsignale an die Regelung des Antriebs, so daß die Vorschubgeschwindigkeit des Supports entsprechend verringert wird. Beim Abfahren eines in Vorschubrichtung abfallenden Profilabschnittes wird die Geschwindigkeit des Supports quer zur Vorschubrichtung durch den Weggeber erfaßt, dessen Ausgangssignale dann zur Regelung der Vorschubgeschwindigkeit des Supportes bei abfallenden Profilabschnitten herangezogen werden. Somit kann der Kopierfinger an einem ansteigenden Profilabschnitt der Schablone einwandfrei beim Verfahren des Supportes in Vorschubrichtung hochlaufen und damit zuverlässig abtasten. Der entsprechende Profilabschnitt am Werkzeugmesser wird dadurch genau und einwandfrei nachgeschliffen. Tastet der Kopierfinger einen in Vorschubrichtung des Supportes abfallenden Profilabschnitt ab, kann die Vorschubgeschwindigkeit des Supportes erhöht werden. Aufgrund der selbsttätigen Einstellung der Vorschubgeschwindigkeit des Supportes in Abhängigkeit vom Steigungswinkel der Profilabschnitte der Schablone bzw. des nachzuschleifenden Werkzeugmessers wird erreicht, daß die Profile an den Werkzeugmessern vollautomatisch mit hoher Genauigkeit nachgeschliffen werden können.

Bevorzugte Ausgestaltungen der Erfindung ergeben sich aus den weiteren Ansprüchen.

Die Erfindung wird anhand eines in den Zeichnungen dargestellten Ausführungsbeispieles näher erläutert. Es zeigen
- Fig. 1: in schematischer Darstellung und in Draufsicht eine erfindungsgemäße Nachschleifmaschine,
- Fig. 2: in vergrößerter Darstellung die Einzelheit Z in Fig. 1,
- Fig. 3: in schematischer Darstellung den mit der Maschine gemäß Fig. 1 durchzuführenden Nachschleifvorgang,
- Fig. 4: in vergrößerter und schematischer Darstellung eine Schwenkeinrichtung zum Verschwenken einer Schleifscheibe der Nachschleifmaschine,
- Fig. 5: einen Blockschaltplan der Steuerung einer erfindungsgemäßen Nachschleifmaschine.

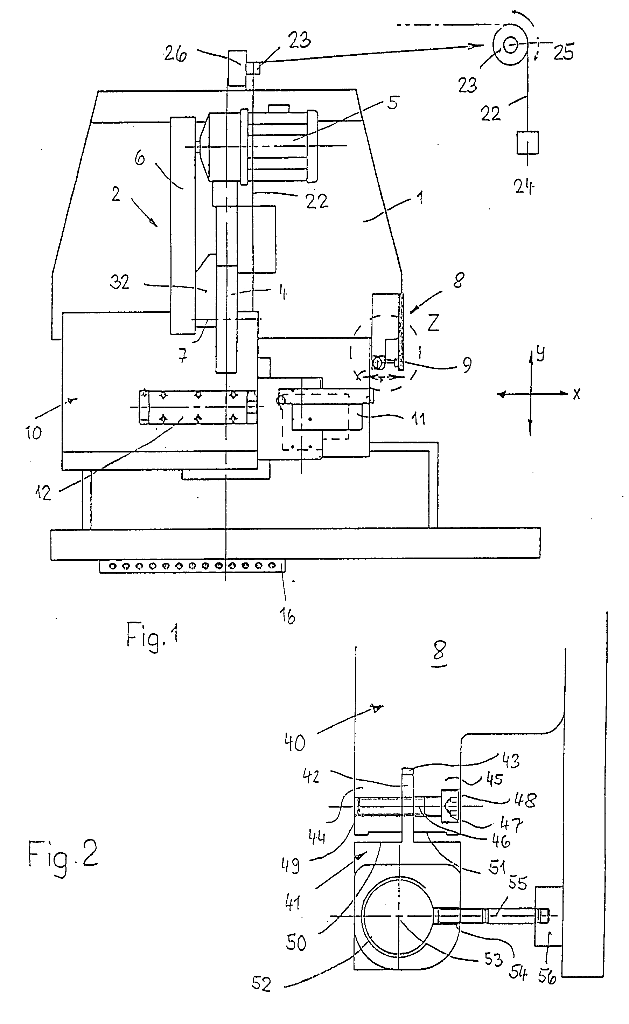

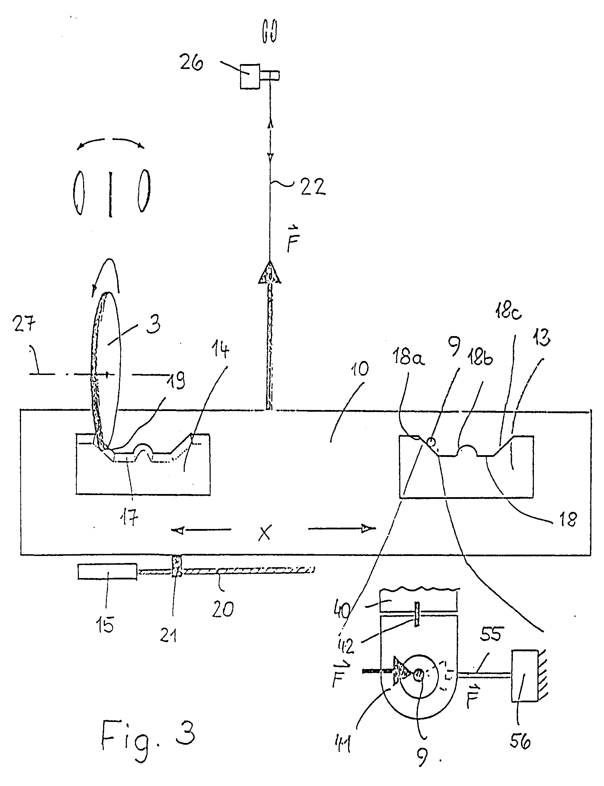

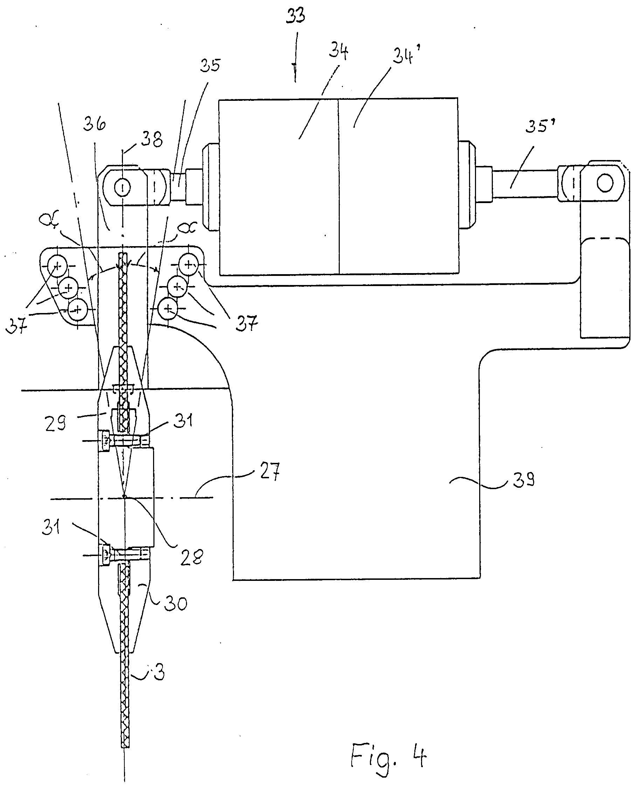

Die Nachschleifmaschine gemäß Fig. 1 hat einen Maschinentisch 1, auf dem ein Schleifscheibenaggregat 2 angeordnet ist. Es hat eine um eine horizontale Achse drehbare Schleifscheibe 3 (Fig. 3 und 4), die unter einer Schutzhaube 4 (Fig. 1) angeordnet ist. Für den Antrieb der Schleifscheibe 3 ist auf dem Schleifscheibenaggregat 2 ein Antriebsmotor 5 vorgesehen, der über ein Getriebe 6, wie einen Riementrieb, die Schleifscheibenwelle 7 drehbar antreibt.

Auf dem Maschinentisch 1 ist eine Kopiereinheit 8 angeordnet, die einen Kopierfinger 9 aufweist. Im Ausführungsbeispiel ist die Kopiereinheit 8 ortsfest am Maschinentisch 1 vorgesehen. Bei einer anderen Ausführungsform kann sie auch in X- und/oder in Y-Richtung verstellbar am Maschinentisch vorgesehen sein.

Am bzw. auf dem Maschinentisch 1 ist ein Support 10 gelagert, auf dem ein Schablonenhalter 11 und ein Werkzeugträger 12 befestigt sind. Auf dem Schablonenhalter 11 wird in bekannter Weise eine Schablone 13 (Fig. 3) und auf dem Werkzeugträger 12 in bekannter Weise das Werkzeug mit den nachzuschärfenden Profilmessern 14 befestigt. Der Support 10 wird mit einem Vorschubmotor 15 (Fig. 3) in X-Richtung verfahren.

An der Vorderseite der Nachschleifmaschine befindet sich ein Steuerpult 16, von dem aus die verschiedenen Antriebe und Bewegungen geschaltet werden können.

Um ein stumpfes Messer 14 nachzuschleifen, wird es mit dem Werkzeug auf den Werkzeugträger 12 aufgespannt. Auf dem Schablonenhalter 11 wird eine diesem Messer 14 hinsichtlich der Profilgebung entsprechende Schablone 13 befestigt. Das Messer 14 und die Schablone 13 werden so in bezug zueinander auf dem Support 10 angeordnet, daß die Schleifscheibe 3 und der Kopierfinger 9, bezogen auf die Profile 17 und 18 des Messers 14 und der Schablone 13, an der gleichen Stelle des Profiles liegen. Der Support 10 wird nun so bewegt, daß der Kopierfinger 9 das Sollprofil 18 der Schablone 13 abfährt. Da sich die Schleifzone 19 der Schleifscheibe 3 an der gleichen Stelle des nachzuschleifenden Profiles 17 des Messers 14 befindet wie der Kopierfinger 9 am Sollprofil 18 der Schablone 13, wird durch Abfahren des Sollprofiles 18 an dem Kopierfinger 9 das Profil 17 des Messers 14 entsprechend dem Sollprofil 18 exakt nachgeschliffen.

Der Support 10 wird mit dem Vorschubmotor 15 in X-Richtung verschoben. Der Vorschubmotor 15 hat eine drehbar angetriebene Spindel 20, auf der eine mit dem Support 10 verbundene Spindelmutter 21 sitzt. Je nach Drehrichtung der Spindel 20 wird somit der Support 10 in Fig. 3 nach links oder nach rechts in X-Richtung verfahren. Während des Nachschleifens kann somit der Support 10 durch den Vorschubmotor 15 selbsttätig in X-Richtung verfahren werden. Die erforderliche gleichzeitige Bewegung des Supportes 10 in Y-Richtung erfolgt dadurch, daß der Support 10 in dieser Richtung kraftbeaufschlagt ist. Im dargestellten bevorzugten Ausführungsbeispiel ist an der vom Steuerpult 16 abgewandten Seite des Supportes 10 ein Seil 22 befestigt, das in geeigneter Weise über den Maschinentisch 1 und über eine Umlenkrolle 23 an dem vom Steuerpult 16 abgewandten Ende des Maschinentisches 1 geführt ist. Das Seil 22 hängt dann hinter dem Maschinentisch 1 nach unten. Am freien Ende des Seils 22 ist ein Gewicht 24 befestigt. Es ist so ausgelegt, daß der Support 10 eine in Y-Richtung gerichtete Kraft F (Fig. 3) erfährt. Dadurch wird erreicht, daß beim Nachschleifvorgang die Schablone 13 durch diese Kraft F ständig gegen den Kopierfinger 9 gedrückt wird. Die Umlenkrolle 23 sitzt auf einer Welle 25, auf der ein Drehgeber 26 angeordnet ist.

Um mit der Schleifscheibe 3 auch seitliche Freiwinkel/Hinterlegungen am Profil 17 des Messers 14 schleifen zu können, ist sie um eine senkrecht zu ihrer Drehachse 27 liegende Achse 28 (Fig. 4) schwenkbar. Die Schleifscheibe 3 wird in bekannter Weise zwischen zwei Spannbacken 29 und 30 eingespannt, die mit Gewindebolzen 31 unter Zwischenlage der Schleifscheibe gegeneinander verspannt werden. Die Spannbacken 29, 30 sitzen drehfest auf der Schleifscheibenwelle 7, deren Achse die Drehachse 27 der Schleifscheibe bildet. Die Schleifscheibenwelle 7 ist in bekannter Weise in einem Träger 32 (Fig. 1) des Schleifscheibenaggregates 2 drehbar gelagert, das um die Schwenkachse 28 (Fig. 4) in beiden Richtungen geschwenkt werden kann. Für diese Verschwenkung ist ein Schwenkantrieb 33 vorgesehen, der bevorzugt durch einen pneumatischen Antrieb gebildet wird. Der Schwenkantrieb 33 hat zwei Pneumatikzylinder 34, 34', die an ihren Bodenflächen fest miteinander verbunden sind. Die Kolbenstange 35' des Pneumatikzylinders 34' ist gelenkig mit dem Maschinentisch 1 verbunden. Die Kolbenstange 35 des Pneumatikzylinders 34 ist an einen Schwenkarm 36 angelenkt, der mit dem Träger 32 fest verbunden ist. Durch Ein- und Ausfahren der Kolbenstangen 35, 35' kann der Träger 32 und damit die Schleifscheibe 3 um die Achse 28 im gewünschten Maße geschwenkt werden. Die Schleifscheibe 3 kann dann die in Fig. 3 schematisch dargestellten Schwenklagen einnehmen, je nach dem, welche Kolbenstange aus- oder eingefahren ist. In der in Fig. 4 dargestellten Lage nimmt die Schleifscheibe 3 ihre Mittelstellung ein. Vorteilhaft kann die Schleifscheibe 3 in der beschriebenen Weise aus dieser Mittelstellung heraus um jeweils einen gleichen Winkel α um die Achse 28 geschwenkt werden.

Anstelle der beschriebenen beiden Pneumatikzylinder kann auch nur ein Pneumatikzylinder mit einer definierten Mittelstellung eingesetzt werden. Die Mittelstellung bestimmt auch die Mittellage der Schleifscheibe 3. Durch Ein- und Ausfahren der Kolbenstange, ausgehend von dieser Mittelstellung, kann die Schleifscheibe 3 in der gewünschten Richtung geschwenkt werden.

Um unterschiedliche Schwenkwinkel α in konstruktiv einfacher Weise einstellen zu können, sind für den Schwenkarm 36 Anschläge 37 vorgesehen, an denen der Schwenkarm bei Erreichen eines entsprechenden Schwenkwinkels zur Anlage kommt. Vorteilhaft sind die Anschläge 37 als steckbare Festanschläge ausgebildet. Im Ausführungsbeispiel gemäß Fig. 4 sind zwei Reihen von Anschlägen 37 vorgesehen, die konvergierend zueinander angeordnet sind. Bei Erreichen des Schwenkwinkels α schlägt der Schwenkarm 36 je nach Schwenkrichtung an dem der Schwenkachse 28 am nächsten liegenden Anschlag 37 an. In dieser Lage wird der kleinste Schwenkwinkel α erreicht. Wird der der Schwenkachse 28 am nächsten liegende Anschlag 37 entfernt, dann kann der Schwenkarm 36 um einen größeren Winkel α so weit schwenken, bis er an dem der Schwenkachse 28 nunmehr am nächsten liegenden Anschlag 37 zur Anlage kommt, der dem bisherigen mittleren Anschlag entsprach. Wird auch dieser Anschlag 37 entfernt, dann befindet sich beiderseits der Längsmittelebene 38 der Schleifscheibe 3 nur noch ein Anschlag 37, der dem am weitesten von der Schwenkachse 28 entfernt liegenden Anschlag 37 der beiden Anschlagreihen entspricht. Werden auch diese letzten Anschläge 37 entfernt, können die Kolbenstangen 35, 35' bis auf Endbegrenzung ein- bzw. ausgefahren werden, wodurch der maximale Schwenkwinkel α erreicht wird.

Durch entsprechende Variation (Positionen) der Anschläge 37 können die Abstufungen der einzelnen Schwenkwinkel α verändert werden. Auch kann durch unterschiedliche schräglagen der beiden Anschlagreihen erreicht werden, daß andere Schwenkwinkel α eingestellt werden können.

Die Anschläge 37 sind auf einem Support 39 auf dem Maschinentisch 1 vorgesehen.

Anstelle der Festanschläge 37 ist es auch möglich, den Schwenkarm 36 gesteuert in unterschiedliche Schwenklagen einzustellen. So kann beispielsweise anstelle des Pneumatikantriebes 33 ein Elektromotor vorgesehen sein, mit dem der Schwenkarm 36 feinfühlig in die verschiedenen Schwenklagen verstellt werden kann.

Die Kopiereinheit 8 hat einen Kopierfingerhalter 40 (Fig. 2), an dem elastisch biegbar ein Kopierfingerträger 41 befestigt ist. Er hat einen abstehenden dünnen Steg 42, der in einen randseitig offenen Schlitz 43 des Kopierfingerhalters 40 ragt. Der Schlitz 43 wird von zwei Armen 44 und 45 begrenzt, die durch wenigstens eine Schraube 46 unter Zwischenlage des Steges 42 gegeneinander verspannt werden. Die Schraube 46 liegt mit ihrem Kopf 47 versenkt in einer seitlichen Vertiefung 48 des Armes 45. Die Schraube 46 durchsetzt den Steg 42 und ist in eine Gewindebohrung 49 des Armes 44 geschraubt.

Der Kopierfingerträger 41 liegt mit seiner dem Kopierfingerhalter 40 zugewandten Seitenfläche 50 mit Abstand der benachbarten Seitenfläche 51 des Kopierfingerhalter 40 gegenüber. Dadurch kann der Kopierfingerträger 41 in begrenztem Maße gegenüber dem Kopierfingerhalter 40 verschwenkt werden. Unter Abstand ist ein Spiel im Bereich von etwa 1/500 mm zu verstehen.

Der Kopierfingerträger 41 hat eine Aufnahme 52 für den Kopierfinger 9. Die Achse 53 der Aufnahme 52 liegt senkrecht zur Achse der Schraube 46. In die Aufnahme 52 mündet eine Gewindebohrung 54, in die ein Gewindebolzen 55 geschraubt ist. Er bildet ein Kraftübertragungselement, das mit dem von der Aufnahme 52 abgewandten Ende in einem Kraftaufnehmer 56 gelagert ist.

Im dargestellten bevorzugten Ausführungsbeispiel ist der Steg 42 einstückig mit dem Kopierfingerträger 41 ausgebildet. Er kann selbstverständlich aber auch lösbar mit ihm und dem Kopierfingerhalter 40 ausgebildet sein. Ebenso ist es möglich, den Steg 42 einstückig mit dem Kopierfingerhalter 40 auszubilden und ihn mittels wenigstens einer Schraube oder dgl. zwischen zwei Armen des Kopierfingerträgers 41 festzuklemmen. Auch kann ein anderes Schwenkgelenk bekannter Bauart eingesetzt werden.

Der Kopierfinger 9 kann um seine Achse drehbar angetrieben werden. Der hierfür vorgesehene Drehantrieb ist in den Fig. 1 bis 4 nicht dargestellt. Der Kopierfinger 9 ist zu diesem Zweck mittels eines (nicht dargestellten) Lagers, vorzugsweise eines Wälzlagers, drehbar in der Aufnahme 52 gelagert.

Mit der beschriebenen Maschine ist es möglich, das Messer 14 vollautomatisch nachzuschärfen. Nachdem das Werkzeug mit den nachzuschärfenden Messern 14 und die zugehörige Schablone 13 auf dem Werkzeugträger 12 und dem Schablonenhalter 11 festgeklemmt worden sind, wird der Support 10, der über einen Kreuzschlitten auf dem Maschinentisch gelagert ist, so gegenüber der Schleifscheibe 3 und dem Kopierfinger 9 ausgerichtet, daß die Schleifzone 19 der Schleifscheibe 3 und der Kopierfinger 9 jeweils am Anfang der Profile 17 und 18 anliegen. Bei der Darstellung gemäß Fig. 3 ist bereits ein Teil des Profiles 17 des Messers 14 nachgeschliffen worden. Mit dem Motor 15 wird der Support 10 in Fig. 3 in X-Richtung nach links verschoben. Gleichzeitig wird der Support 10 über das Gewicht 24 ständig in Y-Richtung belastet, so daß das Messer 14 und die Schablone 13 ständig an der Schleifzone 19 bzw. am Kopierfinger 9 anliegen. Auf diese Weise kann vollautomatisch das gesamte Profil 17 des Messers 14 nachgeschliffen werden. Fällt das Profil 17 des Messers 14 in Verschieberichtung des Supportes 10 ab, wird über das Gewicht 24 der Support 10 in Fig. 3 nach oben verschoben, so daß die Schleifscheibe und der Kopierfinger 9 stets am Profil 17 bzw. 18 anliegen. Steigt das Profil jedoch in Verschieberichtung des Supportes 10 an, wird infolge der Anlage des Kopierfingers 9 am Profil 18 der Support 10 gegen die vom Gewicht 24 ausgeübte Kraft F in Fig. 3 nach unten verschoben. Auf diese Weise ist somit jederzeit sichergestellt, daß die Schleifscheibe und der Kopierfinger sicher am Profil 17 bzw. 18 anliegen.

Die Maschine ist so ausgebildet, daß auch steile Profilabschnitte am Messer 17 einwandfrei vollautomatisch nachgeschliffen werden können. So können Profilabschnitte, die Winkel von mehr als z.B. 60° gegenüber der Vorschubrichtung bilden, mit der Maschine einwandfrei nachgeschärft werden. Dies wird dadurch erreicht, daß die Vorschubgeschwindigkeit des Motors 15 in Abhängigkeit von der Steilheit des jeweiligen Profilabschnittes eingestellt und der Kopierfinger 9 bei ansteigenden Profilabschnitten in noch zu beschreibender Weise drehbar angetrieben wird. Verläuft der entsprechende Profilabschnitt steil, dann wird die Vorschubgeschwindigkeit des Motors 15 verringert. Ist hingegen der Winkel, den der Profilabschnitt mit der Vorschubrichtung einschließt, gering, kann die Vorschubgeschwindigkeit des Motors 15 entsprechend größer sein. Diese Regelung der Vorschubgeschwindigkeit erfolgt automatisch. Als Einstellgröße wird die Kraft, die auf den Kopierfinger 9 während des Abfahrens des Profils 18 der Schablone 13 wirkt, und die Supportgeschwindigkeit in Y-Richtung infolge Auswertung der Signale des Drehgebers 26 herangezogen. Je steiler der Winkel des jeweiligen, in Vorschubrichtung x ansteigenden Profilabschnittes zur Vorschubrichtung des Supportes 10 wird, desto größer wird die Kraft, die von der Schablone 13 auf den Kopierfinger 9 ausgeübt wird. Da er frei vom Kopierfingerträger 41 aus der Aufnahme 42 hervorsteht und der Kopierfingerträger 41 gelenkig mit dem Kopierfingerhalter 40 verbunden ist, wird infolge dieser Kraft der Kopierfingerträger 41 gegenüber dem Kopierfingerhalter 40 geschwenkt. Dadurch wird das Kraftübertragungselement 55 verschoben und im Kraftaufnehmer 56 eine entsprechende Kraft ermittelt. Der Verschiebeweg des Kraftübertragungselementes 55 ist infolge des sehr kleinen Spiels zwischen Kopierfingerhalter 40 und Kopierfingerträger 41 sehr klein. Die vom Kraftaufnehmer 56 ermittelte Kraft wird zur Einstellung der Vorschubgeschwindigkeit des Motors 15 herangezogen. Die Kraft, die auf den Kopierfinger 9 wirkt, wird um so größer, je steiler der Profilabschnitt der Schablone 13 ist. Hierbei ist zu berücksichtigen, daß diese Kraft nur dann ausgewertet wird, wenn der entsprechende Profilabschnitt in Vorschubrichtung des Supportes 10 ansteigt. Ob der jeweilige Profilabschnitt ansteigt oder abfällt, kann anhand der Drehrichtung der Welle 25 der Umlenkrolle 23, wie später noch beschrieben, einfach ermittelt werden. In Fig. 3 befindet sich der Kopierfinger 9 an einem Profilabschnitt 18a, der in Vorschubrichtung (in Fig. 3 nach links) abfällt. In diesem Falle erfolgt keine Auswertung der Auslenkung des Kopierfingerträgers 41 in bezug auf den Kopierfingerhalter 40. Sobald der Kopierfinger 9 jedoch auf die Profilabschnitte 18b oder 18c gelangt, die jeweils in Vorschubrichtung ansteigen, wird eine entsprechende Auslenkung des Kopierfingerträgers 41 und damit eine entsprechende Auslenkkraft, die vom Kraftaufnehmer 56 ermittelt wird, als Regelgröße für die Vorschubgeschwindigkeit des Supports 10 in X-Richtung herangezogen.

Die auf den Kopierfinger 9 wirkende Kraft ist außerdem abhängig von der Kraft, die in Y-Richtung auf den Kopierfinger wirkt, im Ausführungsbeispiel also von der Kraft, die durch das Gewicht 24 erzeugt wird. Der Kraftsensor 56 ermittelt somit eine resultierende Kraft, die auf den Kopierfinger 9 infolge der Vorschubbewegung in X-Richtung und infolge des Gewichtes 24 auf ihn ausgeübt wird.

Um ein Verhaken des Kopierfingers 9 an steilen, in Vorschubrichtung des Supportes 10 ansteigenden Profilabschnitten zu vermeiden, wird der Kopierfinger ab einem vorgebbaren Steigungswinkel dieser Profilabschnitte drehbar angetrieben. Die zutreffende Drehrichtung wird mittels der Auswertung der Vorschubrichtung des Supportes 10 in X-Richtung festgestellt. Fällt der Profilkantenabschnitt, der vom Kopierfinger 9 gerade abgefahren wird, in Vorschubrichtung des Supportes 10 ab (Profilabschnitt 18a), dann wird der Support 10 während seines Vorschubes in X-Richtung in Fig. 3 nach oben bewegt. Steigt hingegen der Profilabschnitt in Vorschubrichtung an (Profilabschnitte 18b und 18c), dann wird der Support 10 bei seinem Vorschub in Fig. 3 nach unten verschoben, wodurch der Drehgeber 26 in umgekehrter Richtung dreht. Aus der Drehrichtung läßt sich somit sehr einfach ableiten, ob der Profilabschnitt in Vorschubrichtung des Supportes 10 ansteigt oder abfällt.

Der Kopierfinger 9 wird nur im Bereich eines in Vorschubrichtung des Supportes 10 ansteigenden Profilabschnittes drehbar angetrieben, vorteilhaft erst ab einer bestimmten Neigung dieses Profilabschnittes. Auf keinen Fall darf der Kopierfinger 9 jedoch drehbar angetrieben werden, wenn er einen in Vorschubrichtung des Supportes 10 abfallenden Profilabschnitt abfährt.

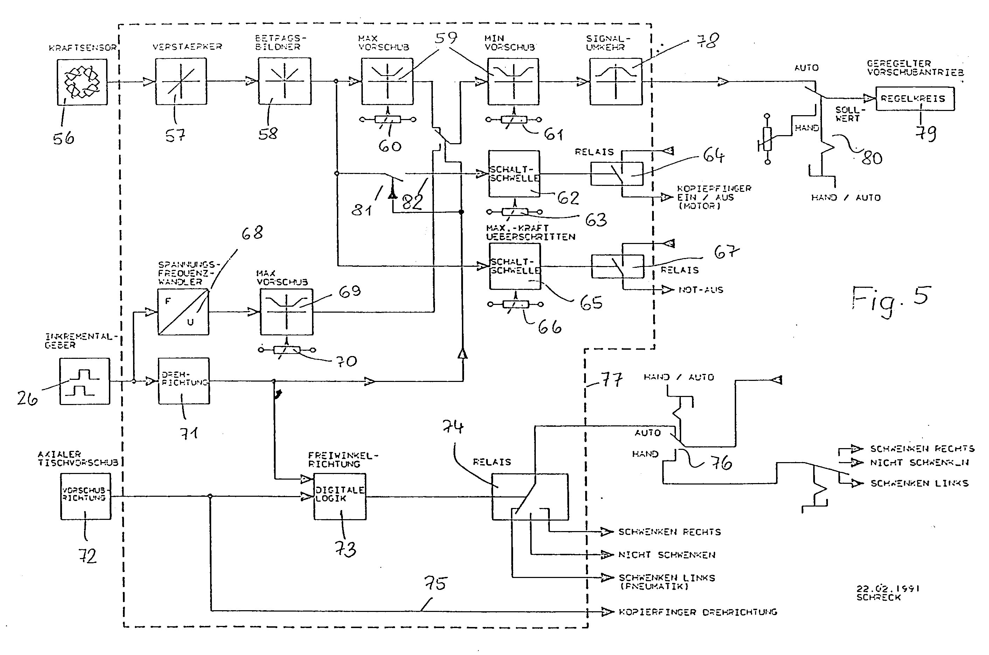

Der Kraftaufnehmer 56, der im Ausführungsbeispiel eine Dehnmeßstreifen-Vollbrückenschaltung aufweist (Fig. 5), erzeugt eine der auf ihn wirkenden Kraft proportionale Spannung, die von einem nachfolgenden Verstärker 57 verstärkt wird. Da die Spannung negative und positive Werte annehmen kann, je nach dem, ob Zug- oder oder Druckbeanspruchung auftritt, wird das Ausgangssignal des Verstärkers 57 einem Präzisionsgleichrichter 58 zugeführt, der von dem vom Verstärker 57 kommenden Wert den Betrag bildet.

Das Ausgangssignal des Präzisionsgleichrichters 58 wird einer Begrenzungsstufe 59 zugeführt, mit der der maximale oder der minimale Vorschub eingestellt werden kann. Der Maximal- sowie der Minimalwert lassen sich jeweils mit einem Potentiometer 60 und 61 einstellen. Der Begrenzungsstufe 59 ist ein Umkehrglied 78 nachgeschaltet, welches das Ausgangssignal der Begrenzungsstufe 59 umkehrt.

Das Ausgangssignal des Präzisionsgleichrichters 58 wird außerdem einer Schaltstufe 62 zugeführt, mit der eingestellt werden kann, wann der Kopierfinger 9 drehbar angetrieben werden soll. Zur Einstellung dieser Schaltschwelle ist ein Potentiometer 63 vorgesehen. Mit diesem Potentiometer 63 läßt sich somit diejenige Kraft einstellen, bei der der Kopierfinger 9 in der beschriebenen Weise drehbar angetrieben wird. Der Kopierfinger 9 kann nur bei einem ansteigenden Profilabschnitt (18b, 18c in Fig. 3) drehbar angetrieben werden. Ein solcher ansteigender Profilabschnitt wird vom Drehgeber 26 aufgrund der entsprechenden Drehrichtung der Umlenkrolle 23 erkannt. Der Drehgeber 26 liefert dann entsprechende Signale an einen elektronischen Schalter 81. Befindet sich der Kopierfinger an einem in Vorschubrichtung des Supportes 10 ansteigenden Profilabschnitt (18b oder 18c in Fig. 3), dann steigt die auf den Kopierfinger 9 wirkende Kraft umso mehr an, je steiler dieser Abschnitt verläuft. Durch Einstellung der Schaltschwelle mittels des Potentiometers 63 kann einfach festgelegt werden, ab welcher Kraft der Antrieb für den Kopierfinger 9 eingeschaltet wird. Diese Kraft wird mit dem Kraftaufnehmer 56 gemessen und der Schaltstufe 62 zugeführt. Ist die auf den Kopierfinger 9 wirkende Kraft während des Nachschärfvorganges kleiner als die mit dem Potentiometer 63 eingestellte Kraft, dann wird der Kopierfingerantrieb nicht eingeschaltet. Übersteigt die auf den Kopierfinger 9 wirkende Kraft den voreingestellten Wert, dann wird unter Berücksichtigung der vom Drehgeber 26 gelieferten und die Drehrichtung und damit die Steigungsrichtung des Profilabschnittes kennzeichnenden Signale über ein nachgeschaltetes Relais 64 der Kopierfingerantrieb eingeschaltet und der Kopierfinger im erforderlichen Drehsinne drehbar angetrieben.

Das Ausgangssignal des Präzisionsgleichrichters 58 wird schließlich noch einer weiteren Schaltstufe 65 zugeführt, mit der die auf den Kopierfinger 9 wirkende, maximal zulässige Kraft eingestellt werden kann. Hierzu dient wiederum ein Potentiometer 66. Wird diese Höchstkraft überschritten, wird ein nachgeschaltetes Relais 67 erregt und die gesamte Maschine stillgesetzt, um eine Beschädigung des Kopierfingers 9 und des Kraftaufnehmers 56 zu verhindern. Das Relais 67 schaltet somit bei Überlast die Maschine ab.

Dem Drehgeber 26 ist ein Drehrichtungserkenner 71 nachgeschaltet, dessen Ausgangssignal als Parameter herangezogen wird, ob zur Vorschubgeschwindigkeitsregelung des Supports 10 das Signal des Kraftaufnehmers 56 oder die Drehfrequenz des Drehgebers 26 ausgewertet wird. Anhand der Drehrichtung der Umlenkrolle 23 bzw. des Drehgebers 26 läßt sich in der beschriebenen Weise einfach feststellen, ob der Support 10 in der einen oder anderen Y-Richtung verschoben wird und ob demgemäß der Kopierfinger 9 an einem in Vorschubrichtung des Supportes 10 ansteigenden oder abfallenden Profilabschnitt anliegt. Steigt der gerade abgefahrene Profilobschnitt 18b, 18c in Vorschubrichtung (X-Richtung) des Supportes 10 an, dann liefert der Drehrichtungserkenner 71 ein entsprechendes Signal, anhand dessen die Steuerung über einen elektronischen Schalter 82 das Signal des Kraftaufnehmers 56 zur Regelung der Vorschubgeschwindigkeit des Supportes 10 heranzieht. Fällt hingegen der gerade abgefahrene Profilabschnitt 18a in Vorschubrichtung des Supportes 10 ab, dann liefert der Drehrichtungserkenner 71 aufgrund der anderen Drehrichtung der Umlenkrolle 23 ein entsprechend anderes Signal, anhand dessen die Drehfrequenz des Drehgebers 26 zur Regelung der Vorschubgeschwindigkeit des Supportes 10 herangezogen wird.

Um den Einfluß des Steigungswinkels bei abfallenden Profilabschnitten 18a zu berücksichtigen, wird das vom Drehgeber 26 erzeugte Signal einem Spannungs-Frequenz-Wandler 68 zugeführt, dessen Ausgangssignal (Spannungswert) einer Begrenzungsstufe 69 zugeführt wird. Diese Begrenzungsstufe 69 dient zur Einstellung des maximalen Vorschubes, für den ein einstellbares Potentiometer 70 vorgesehen ist. Das Ausgangssignal der Begrenzungsstufe 69 wird der Begrenzungsstufe 59 zugeführt. Der vom Drehgeber 26 gelieferte Spannungswert ist bei vorgegebener Vorschubgeschwindigkeit des Supportes 10 in X-Richtung umso höher, je größer der Steigungswinkel des jeweiligen abfallenden Profilabschnittes ist. Die Umlenkrolle 23 dreht sich bei größeren Steigungswinkeln des abfallenden Profilabschnittes schneller als bei kleineren.

Für den axialen Vorschub des Supportes 10 ist ein Geber 72 vorgesehen, der die Vorschubrichtung des Supportes 10 feststellen kann. Beispielsweise kann der Geber 72 ein Drehgeber sein, der anhand der Drehrichtung der Spindel 20 des Vorschubmotors 15 feststellen kann, in welcher X-Richtung sich der Support 10 bewegt. Das Ausgangssignal des Gebers 72 wird ebenso wie das Ausgangssignal des Drehrichtungserkenners 71 einer Elektronik 73 zugeführt, die aus den Eingangssignalen des Drehgebers 26 und des Gebers 72 feststellen kann, ob die Schleifscheibe 3 geschwenkt werden muß oder in ihrer Mittelstellung bleiben kann. Gelangt der Kopierfinger 9 an einen in Vorschubrichtung x abfallenden Profilabschnitt 18a, bewegt sich der Support 10 in Fig. 3 nach oben. Gelangt der Kopierfinger 9 hingegen auf einen in Vorschubrichtung x ansteigenden Profilabschnitt 18b oder 18c, bewegt sich der Support 10 nach unten. Die Umlenkrolle 23 wird somit in unterschiedlichen Richtungen gedreht. Das Ausgangssignal des Drehgebers 26 zeigt an, ob ein abfallender oder ein ansteigender Profilabschnitt vorliegt und das Ausgangssignal des Gebers 72 zeigt an, in welcher X-Richtung sich der Support 10 bewegt. Entsprechend diesen beiden Ausgangssignalen des Drehgebers 26 und des Gebers 72 gibt dann die Elektronik 73 einem nachgeschalteten Relais 74 ein entsprechendes Ausgangssignal, das eine Verschwenkung des Schwenkarmes 36 in einem Fall nach rechts und im anderen Fall nach links auslöst. Bewegt sich der Kopierfinger 9 längs eines in Vorschubrichtung x sich erstreckenden Profilabschnittes dann dreht sich die Umlenkrolle 23 nicht, so daß der Drehgeber 26 kein Signal liefert. Über die Elektronik 73 wird dann die Schleifscheibe 3 wieder in ihre Mittelstellung zurückgeschwenkt. Auf diese Weise kann vollautomatisch die Schleifscheibe 3 in die erforderliche Schwenklage geschwenkt werden.

Die Erkennung der Vorschubrichtung x kann auch in bekannter Weise über die Schützsteuerung des Vorschubmotors 15 erfolgen.

Aus dem Ausgangssignal des Gebers 72 kann auch ein Signal 75 abgeleitet werden, anhand dessen die erforderliche Drehrichtung des Kopierfinger 9 bestimmt werden kann.

Das Relais 74 kann von Hand mittels eines Schalter 76 auf manuellen Betrieb umgeschaltet werden. Dann kann die Schleifscheibe 3 auch von Hand in die jeweilige Schwenklage geschwenkt oder in der Mittelstellung gelassen werden.

Die beschriebenen Schaltglieder sind, wie in Fig. 5 durch eine gestrichelte Linie verdeutlicht ist, Teil einer Steuereinheit 77. Die Eingangsgrößen werden vom Kraftaufnehmer 56, vom Drehgeber 26 und vom Geber 72 geliefert.

Sind die Messer 14 und die Schablone 13 zu Beginn des Nachschärfvorganges auf ihre Ausgangspositionen eingestellt, wird der Vorschubmotor 15 eingeschaltet. Von nun an verläuft der Nachschärfvorgang am Messer 14 vollautomatisch. Mit dem Drehgeber 26 kann festgestellt werden, ob sich der Kopierfinger 9 auf einem in Vorschubrichtung des Supportes 10 abfallenen Profilabschnitt oder auf einem ansteigenden Profilabschnitt befindet. Bei einem ansteigenden Profilabschnitt nimmt die auf den Kopierfinger 9 und damit auf den Kopierfingerträger 41 wirkende Kraft zu, wodurch der Kopierfingerträger 41 verschwenkt wird und über das Kraftübertragungselement 55 eine Kraft auf den Kraftaufnehmer 56 ausübt. Dieser liefert ein entsprechendes Ausgangssignal, das von der Steuereinheit 77 in der beschriebenen Weise ausgewertet wird. So lange die vom Kraftaufnehmer 56 gemessene Kraft unterhalb des mit der Schaltstufe 62 eingestellten Wertes liegt, wird der Drehantrieb des Kopierfingers 9 nicht eingeschaltet. Die maximale und die minimale Vorschubgeschwindigkeit des Supportes 10 wird in der Geschwindigkeitsstufe 59 mittels der einstellbaren Potentiometer 60 und 61 eingestellt. Übersteigt die mit dem Kraftaufnehmer 56 ermittelte Kraft den an der Schaltstufe 65 eingestellten Schwellwert, wird die Maschine stillgesetzt, um eine Beschädigung der Schleifscheibe 3 und/oder des Messers 14 und/oder des Kopierfingers 9 und/oder des Kraftaufnehmers 56 zu verhindern.

Bewegt sich der Kopierfinger 9 während des Nachschleifvorganges auf einem in Vorschubrichtung des Supportes 10 ansteigenden Profilabschnitt, beispielsweise am Profilabschnitt 18b oder 18c, dann nimmt die auf den Kopierfinger 9 und auf dessen Träger 41 wirkende Kraft zu. Je größer die Neigung dieses Profilabschnittes ist, desto größer wird die auf den Profilfinger 9 und dessen Träger 41 wirkende Kraft. Überschreitet sie den an der Schaltstufe 62 mit dem Potentiometer 63 eingestellten Schwellwert, wird über das Relais 64 der Drehantrieb des Kopierfingers 9 eingeschaltet. Er wird so angetrieben, daß er das Hochlaufen am ansteigenden Profilabschnitt 18b oder 18c unterstützt. Die erforderliche Drehrichtung des Kopierfingers 9 wird aus dem Ausgangssignal des Gebers 72 abgeleitet, mit dem die Vorschubrichtung des Supportes 10 erfaßt wird. Bewegt sich der Support 10 in Fig. 3 beispielsweise nach links, dann wird der Kopierfinger 9 bei Überschreiten eines entsprechenden Neigungswinkels der ansteigenden Profilabschnitte 18b oder 18c im Ührzeigersinn drehend angetrieben.

Sobald der Kopierfinger 9 auf einen in Vorschubrichtung des Supportes 10 ansteigenden Profilabschnitt gelangt, nimmt die auf den Kopierfinger bzw. auf den Kopierfingerträger 41 wirkende Kraft zu, die umso größer wird, je stärker dieser Profilabschnitt geneigt zur Vorschubrichtung verläuft. An der Zunahme der vom Kraftaufnehmer 56 gemessenen Kraft wird der Beginn eines ansteigenden Profilabschnittes einwandfrei ermittelt. Um auch in solchen Profilabschnitten einwandfrei nachschleifen zu können, wird die Vorschubgeschwindigkeit des Supportes 10 verringert. Vorteilhaft wird diese Vorschubgeschwindigkeit so verringert, daß auch in schräg liegenden Profilabschnitten annähernd die gleiche Schleifleistung erzielt wird wie auf in Vorschubrichtung liegenden Profilabschnitten.

Gelangt der Kopierfinger 9 auf in Vorschubrichtung des Supportes 10 liegende Profilabschnitte, wird die auf den Kopierfinger 9 wirkende Kraft kleiner. Das entsprechende Ausgangssignal des Kraftaufnehmers 56 führt dazu, daß die Vorschubgeschwindigkeit des Supportes 10 wieder erhöht und der Drehantrieb des Kopierfingers 9 abgeschaltet wird. Fällt der Profilabschnitt in Vorschubrichtung des Supportes 10 ab, dann wird der Drehantrieb des Kopierfingers 9 ebenfalls nicht eingeschaltet. Ein sauberes Nachschleifen wäre dann nicht mehr gewährleistet.

Das Ausgangssignal des Umkehrgliedes 78 wird als Soll-Signal einem Regelkreis 79 zugeführt, in dem dieses Soll-Signal mit einem Ist-Signal verglichen wird. Über diesen Regelkreis 79 kann der Vorschubmotor 15 in bekannter Weise geregelt werden.

Die Vorschubgeschwindigkeit des Supportes 10 kann wiederum manuell eingestellt werden. Hierzu ist ein entsprechender Schalter 80 vorgesehen, mit dem einfach die Automatik ausgeschaltet und auf Handbetrieb umgeschaltet werden kann.

## Patentansprüche

1. Nachschleifmaschine mit wenigstens einem Schleifscheibenaggregat (2), mit einem in Richtung der Schleifscheibenachse (27) und quer dazu verschiebbaren Support (10), auf dem mindestens ein Werkzeugträger (12) vorgesehen ist, auf dem das nachzuschleifende Werkzeug befestigbar ist, mit einer Kopiereinheit (8), die einen Kopierfinger (9) und einen Schablonenhalter (11) aufweist, an dem eine Schablone (13) befestigbar ist, und mit einem Antrieb (15) für den Support (10), der mittels des Antriebs (15) in Richtung der Schleifscheibenachse (27) verfahrbar ist und auf den quer zur Schleifscheibenachse (27) eine Kraft (F) wirkt, die den Support (10) in Richtung auf das Schleifscheibenaggregat (2) belastet,
dadurch gekennzeichnet, daß zur selbsttätigen Einstellung der Vorschubgeschwindigkeit des Supports (10) in Abhängigkeit des Steigungswinkels eines Profilabschnittes (18a, 18b, 18c) des Werkzeugmessers (14) bzw. der Schablone (13) eine Steuerung vorgesehen ist, die Schaltsignale von einem Kraftaufnehmer (56) erhält, der die auf den Kopierfinger (9) beim Abfahren von ansteigenden Profilabschnitten (18b, 18c) wirkenden Kräfte mißt, und daß die Geschwindigkeit des Supports (10) quer zur Vorschubrichtung (x) beim Abfahren eines abfallenden Profilabschnittes (18a) durch einen Weggeber (26) bestimmbar ist, dessen Ausgangssignale zur Regelung der Vorschubgeschwindigkeit des Supports (10) bei abfallenden Profilabschnitten (18a) herangezogen werden.

2. Maschine nach Anspruch 1,
dadurch gekennzeichnet, daß die Vorschubgeschwindigkeit des Supports (10) in Abhängigkeit vom Steigungswinkel des in Vorschubrichtung (x) ansteigenden Profilabschnittes (18b, 18c) des Werkzeugmessers (14) bzw. der Schablone (13) mittels eines Schalters (76, 80) auf Handbetrieb umschaltbar ist.

3. Maschine nach Anspruch 1,
dadurch gekennzeichnet, daß die Vorschubgeschwindigkeit des Supports (10) in Abhängigkeit vom Steigungswinkel des in Vorschubrichtung (x) abfallenden Profilabschnittes (18a) des Werkzeugmessers bzw. der Schablone (13) geregelt wird.

4. Maschine nach einem der Ansprüche 1 bis 3,
dadurch gekennzeichnet, daß der Kopierfinger (9) an einem Kopierfingerträger (41) gelagert ist, der quer zur Achse des Kopierfingers (9) auslenkbar und gelenkig mit einem Kopierfingerhalter (40) verbunden ist.

5. Maschine nach Anspruch 4,
dadurch gekennzeichnet, daß der Kopierfingerträger (41) über einen schmalen Steg (42) gelenkig mit dem Kopierfingerhalter (40) verbunden, vorzugsweise einstückig mit dem Kopierfingerträger (41) ausgebildet und zwischen zwei Armen (44, 45) des Kopierfingerhalters (40) festgeklemmt ist.

6. Maschine nach Anspruch 4 oder 5,
dadurch gekennzeichnet, daß im Kopierfingerträger (41) wenigstens ein Kraftübertragungselement (55) gelagert ist, das beim Auslenken des Kopierfingerträgers (41) eine Kraft auf den Kraftaufnehmer (56) ausübt.

7. Maschine nach einem Ansprüche 1 bis 6,
dadurch gekennzeichnet, daß der Kopierfinger (9) drehbar antreibbar ist, und daß der Drehantrieb für den Kopierfinger (9) vorzugsweise in Abhängigkeit vom Steigungswinkel des in Vorschubrichtung (x) des Supports (10) ansteigenden Profilabschnittes (18b, 18c) des Werkzeuges (14) bzw. der Schablone (13) einschaltbar ist, und daß der Kopierfinger (9) vorzugsweise in einer Richtung derart drehbar antreibbar ist, daß er beim Vorschub des Supportes (10) am abzutastenden ansteigenden Profilabschnitt (18b, 18c) sich aufwärts dreht.

8. Maschine nach Anspruch 7,
dadurch gekennzeichnet, daß das Schaltsignal zum Einschalten des Drehantriebes für den Kopierfinger (9) vom Kraftaufnehmer (56) abgeleitet ist.

9. Maschine nach einem der Ansprüche 1 bis 8,
dadurch gekennzeichnet, daß die Schleifscheibe (3) aus einer Mittelstellung zumindest nach einer Seite, vorzugsweise nach beiden Seiten hin, während des Nachschleifvorganges automatisch schwenkbar ist, und daß der vorzugsweise als Pneumatikantrieb ausgebildete Schwenkantrieb (33) für die Schleifscheibe (3) vom Vorschubantrieb (15) des Supports (10) und vom Weggeber (26) ein Schaltsignal zum Schwenken der Schleifscheibe (3) in der jeweils erforderlichen Richtung erhält.

10. Maschine nach einem der Ansprüche 1 bis 9,
dadurch gekennzeichnet, daß der vorzugsweise als Inkrementalgeber ausgebildete Weggeber (26) auf einer Welle (25) einer Umlenkrolle (23) sitzt, über die ein am Support (10) befestigtes Zugteil (22) geführt ist, über das die quer zur Vorschubrichtung (x) wirkende Kraft auf den Support (10) ausgeübt wird, und daß vorzugsweise am freien Ende des Zugteiles (22) ein Gewicht (24) befestigt ist.

11. Maschine nach einem der Ansprüche 1 bis 10,
dadurch gekennzeichnet, daß das Ausgangssignal des Weggebers (26) und des Kraftaufnehmers (56) einem Regelkreis (79) zuführbar ist, der die Geschwindigkeit des Antriebs (15) für den Support (10) regelt.

12. Maschine nach einem der Ansprüche 9 bis 11,
dadurch gekennzeichnet, daß der Schwenkantrieb (33) an einem Schwenkarm (36) angreift, der mit dem Schleifscheibenaggregat (2) verbunden ist, und daß vorzugsweise der Schwenkwinkel (α) der Schleifscheibe (3) durch wenigstens einen Anschlag (37) begrenzt ist, an dem der Schwenkarm (36) zur Anlage kommt.

13. Maschine nach Anspruch 12,
dadurch gekennzeichnet, daß beiderseits der Längsmittelebene (38) der Schleifscheibe (3) mehrere verstellbare Anschläge (37) vorgesehen sind, die vorzugsweise in in Richtung auf die Schwenkachse (28) der Schleifscheibe (3) konvergierenden Reihen angeordnet sind und durch steckbare Bolzen oder dergleichen gebildet sind.

14. Maschine nach einem der Ansprüche 9 bis 12,
dadurch gekennzeichnet, daß der Anschlag durch voll ein- oder ausgefahrene Kolbenstangen (35, 35') des Pneumatikantriebes (33) gebildet ist, und daß vorzugsweise in der Leitungsverbindung vom Weggeber (26) zum Schwenkantrieb (33) ein Schalter (76) liegt, mit dem der Schwenkantrieb (33) auf Handbetrieb umstellbar ist.

15. Maschine nach einem der Ansprüche 1 bis 14,
dadurch gekennzeichnet, daß dem Weggeber (26) ein Spannungs-Frequenz-Wandler (68) nachgeschaltet ist.

16. Maschine nach einem der Ansprüche 1 bis 15,
dadurch gekennzeichnet, daß dem Weggeber (26) ein Drehrichtungserkenner (71) nachgeschaltet ist, mit dem ein ansteigender und ein abfallender Profilabschnitt des Messers (14) erkennbar ist.

## Claims

1. A regrinding machine with at least one grinding wheel unit (2), having a support (10) which is displaceable in the direction of the grinding wheel axis (27) and transversely with respect thereto and on which there is provided at least one tool carrier (12) on which the tool to be reground can be secured, having a copying unit (8) which has a copying finger (9) and a template holder (11) on which a template (13) can be secured, and having a drive (15) for the support (10) which is movable by means of the drive (15) in the direction of the grinding wheel axis (27) and on which there acts transversely with respect to the grinding wheel axis (27) a force (F) which loads the support (10) in the direction of the grinding wheel unit (2), characterized in that for automatically adjusting the advancing speed of the support (10) in dependence on the angle of inclination of a profile section (18a, 18b, 18c) of the tool blade (14) or of the template (13) there is provided a control which receives switching signals from a force pick-up (56) which measures the forces acting on the copying finger (9) as it moves off rising profile sections (18b, 18c), and in that the speed of the support (10) transversely with respect to the advancing direction (x) as it moves off a descending profile section (18a) can be determined by a position encoder (26) whereof the output signals are used to regulate the advancing speed of the support (10) at descending profile sections (18a).

2. Machine according to Claim 1, characterized in that the advancing speed of the support (10) can be switched over to manual operation by means of a switch (76, 80) in dependence on the angle of inclination of the profile section (18b, 18c) of the tool blade (14) or of the template (13) which rises in the advancing direction (x).

3. Machine according to Claim 1, characterized in that the advancing speed of the support (10) is regulated in dependence on the angle of inclination of the profile section (18a) of the tool blade or of the template (13) which descends in the advancing direction (x).

4. Machine according to one of Claims 1 to 3, characterized in that the copying finger (9) is mounted on a copying finger carrier (41) which can be deflected outwards transversely with respect to the axis of the copying finger (9) and is articulatedly connected to a copying finger holder (40).

5. Machine according to Claim 4, characterized in that the copying finger carrier (41) is articulatedly connected to the copying finger holder (40) by way of a narrow web (42), or preferably constructed in one piece with the copying finger carrier (41) and is firmly clamped between two arms (44, 45) of the copying finger holder (40).

6. Machine according to Claim 4 or 5, characterized in that there is mounted in the copying finger carrier (41) at least one force transmission element (55) which exerts a force on the force pick-up (56) when the copying finger carrier (41) is deflected outwards.

7. Machine according to one of Claims 1 to 6, characterized in that the copying finger (9) can be rotatably driven, and in that the rotary drive for the copying finger (9) can be switched on preferably in dependence on the angle of inclination of the profile section (18b, 18c) of the tool (14) or of the template (13) which rises in the advancing direction (x) of the support (10), and in that the copying finger (9) can be rotatably driven preferably in a direction such that it rotates upwards when the support (10) advances against the rising profile section (18b, 18c) to be scanned.

8. Machine according to Claim 7, characterized in that the switching signal for switching on the rotary drive for the copying finger (9) is produced by the force pick-up (56).

9. Machine according to one of Claims 1 to 8, characterized in that the grinding wheel (3) during the regrinding procedure can be pivoted automatically from a central position at least to one side, preferably to both sides, and in that the pivot drive (33), which is preferably constructed as a pneumatic drive, for the grinding wheel (3) receives from the advancing drive (15) of the support (10) and from the position encoder (26) a switching signal for pivoting the grinding wheel (3) in the respectively required direction.

10. Machine according to one of Claims 1 to 9, characterized in that the position encoder (26), which is preferably constructed as an incremental sensor, is seated on a shaft (25) of a deflection roller (23) over which there is guided a tensile part (22) which is secured to the support (10) and by way of which the force acting transversely with respect to the advancing direction (x) is exerted on the support (10), and in that a weight (24) is preferably secured to the free end of the tensile part (22).

11. Machine according to one of Claims 1 to 10, characterized in that the output signal of the position encoder (26) and of the force pick-up (56) can be supplied to a regulating circuit (79) which regulates the speed of the drive (15) for the support (10).

12. Machine according to one of Claims 9 to 11, characterized in that the pivot drive (33) acts on a pivotal arm (36) which is connected to the grinding wheel unit (2), and in that preferably the pivot angle (α) of the grinding wheel (3) is limited by at least one stop (37) against which the pivotal arm (36) comes to bear.

13. Machine according to Claim 12, characterized in that there are provided on both sides of the longitudinal centre plane (38) of the grinding wheel (3) a plurality of adjustable stops (37) which are preferably arranged in rows which converge in the direction of the pivot axis (28) of the grinding wheel (3) and are formed by insertable pins or the like.

14. Machine according to one of Claims 9 to 12, characterized in that the stop is formed by fully retracted or extended piston rods (35, 35') of the pneumatic drive (33), and in that there is located preferably in the line connection from the position encoder (26) to the pivot drive (33) a switch (76) by means of which the pivot drive (33) can be switched over to manual operation.

15. Machine according to one of Claims 1 to 14, characterized in that a voltage-to-frequency converter (68) is arranged downstream of the position encoder (26).

16. Machine according to one of Claims 1 to 15, characterized in that there is arranged downstream of the position encoder (26) a means (71) for detecting the direction of rotation by means of which a rising and a descending profile section of the blade (14) can be detected.

## Revendications

1. Machine à réaffûter comprenant au moins un groupe de meulage (2), un support (10) pouvant se déplacer en translation parallèlement à l'axe (27) de la meule et transversalement à cet axe, sur lequel est prévu au moins un porte-outil (12) sur lequel un outil à réaffûter peut être fixé, une unité de reproduction (8) qui présente un palpeur (9) et une monture (11) de gabarit sur laquelle un gabarit (13) peut être fixé, et un entraînement (15) pour le support (10) qui peut être déplacé dans une direction parallèle à l'axe (27) de la meule au moyen d'un entraînement (15) et sur lequel agit, transversalement à l'axe (27) de la meule, une force (F) qui sollicite le support (10) en direction du groupe de meulage (2),
caractérisée en ce que, pour le réglage automatique de la vitesse d'avance du support (10) en fonction de l'angle de pente d'un segment (18a, 18b, 18c) du profil de la lame (14) de l'outil ou du gabarit (13), il est prévu une commande qui reçoit des signaux de commande en provenance d'un capteur de force (56) qui mesure les forces qui agissent sur le palpeur (9) lorsque ce dernier parcourt des segments de profil (18b, 18c) en pente montante, et en ce que la vitesse du support (10) dans la direction transversale à la direction d'avance (x) peut être déterminée, lorsqu'on parcourt un segment de profil (18a) en pente descendante, par un capteur de course (26) sont les signaux de sortie sont utilisés pour la régulation de la vitesse d'avance du support (10) dans le cas de segments de profil (18a) en pente descendante.

2. Machine selon la revendication 1, caractérisée en ce que la vitesse d'avance du support (10) peur être commutée sur la commande manuelle au moyen d'un commutateur (76, 80), en fonction de l'angle de pente du segment de profil (18b, 18c) de la lame (14) de l'outil ou du gabarit (13) qui monte dans le sens (x) de l'avance.

3. Machine selon la revendication 1, caractérisée en ce que la vitesse d'avance du support (10) est réglée en fonction de l'angle de pente du segment de profil (18a) de la lame de l'outil ou du gabarit (13) qui descend dans le sens (x) de l'avance.

4. Machine selon une des revendications 1 à 3, caractérisée en ce que le palpeur (9) est monté sur un support (41) de palpeur qui peut dévier transversalement à l'axe du palpeur (9) et est relié à la monture (40) du palpeur par une articulation.

5. Machine selon la revendication 4, caractérisée en ce que le support (41) du palpeur est relié à la monture (40) du palpeur de façon articulée par l'intermédiaire d'une étroite nervure (42), est de préférence d'une seule pièce avec le support (41) du palpeur, et est serré entre deux bras (44, 45) de la monture (40) du palpeur.

6. Machine selon la revendication 4 ou 5, caractérisée en ce que, dans le support (41) du palpeur, est monté au moins un élément (55) de transmission de force qui, lorsque le support (41) du palpeur dévie, exerce une force sur le capteur de force (56).

7. Machine selon une des revendications 1 à 6, caractérisée en ce que le palpeur (9) peut être entraîné en rotation, en ce que l'entraînement en rotation pour le palpeur (9) peut être mis en marche, de préférence en fonction de l'angle de pente du segment de profil (18b, 18c) de l'outil (14) ou du gabarit (13) qui monte dans le sens (x) de l'avance du support (10), et en ce que le palpeur (9) peut être entraîné en rotation de préférence dans un sens tel que, lorsque le support (10) avance, le palpeur tourne dans le sens qui monte le long du segment de profil (18b, 18c) en pente montante qu'il s'agit de palper.

8. Machine selon la revendication 7, caractérisée en ce que le signal de commande pour la mise en marche de l'entraînement en rotation du palpeur (9) est dérivé du capteur de force (56).

9. Machine selon une des revendications 1 à 8, caractérisée en ce que la meule (3) peut pivoter automatiquement, au moins vers un côté et de préférence vers les deux côtés, à partir d'une position centrale, pendant l'opération de réaffûtage, et en ce que l'entraînement de pivotement (33) de la meule (3), qui est de préférence constitué par un entraînement pneumatique, reçoit de l'entraînement d'avance (15) du support (10) et du capteur de course (26), un signal de commande pour faire pivoter la meule (3) dans le sens nécessaire dans chaque cas.

10. Machine selon une des revendications 1 à 9, caractérisée en ce que le capteur de course (26) qui est de préférence constitué par un capteur incrémental, est monté sur un arbre (25) d'une poulie de renvoi (23) sur laquelle passe un élément de traction (22) fixé au support (10) et par l'intermédiaire duquel la force agissant transversalement à la direction d'avance (x) est exercée sur le support (10), et en ce qu'un poids (24) est de préférence fixé à l'extrémité libre de l'élément de traction.

11. Machine selon une des revendications 1 à 10, caractérisée en ce que le signal de sortie du capteur de course (26) et celui du capteur de force (56) peuvent être transmis à un circuit de régulation (79) qui règle la vitesse de l'entraînement (15) pour le support (10).

12. Machine selon une des revendications 9 à 11, caractérisée en ce que l'entraînement de pivotement (33) attaque un bras pivotant (36) qui est relié au groupe de meulage (2) et en ce que l'angle de pivotement (.) de la meule (3) est de préférence limité par au moins une butée (37) contre laquelle le bras pivotant (36) vient s'appuyer.

13. Machine selon la revendication 12, caractérisée en ce que plusieurs butées réglables (37) sont prévues de chaque côté du plan médian longitudinal (38) de la meule (3), butées qui sont de préférence disposées en rangées qui convergent vers l'axe de pivotement (28) de la meule (3), et formées par des tiges ou analogues enfichables.

14. Machine selon une des revendications 9 à 12, caractérisé en ce que la butée est formée par des tiges de pistons (35, 35') de l'entraînement pneumatique (33), qui peuvent être rétractées ou mises en extension et en ce qu'un commutateur (76), au moyen duquel l'entraînement de pivotement (33) peut être commuté sur la commande manuelle, est intercalé de préférence dans la liaison de transmission allant du capteur de course (26) à l'entraînement de pivotement (33).

15. Machine selon une des revendications 1 à 14, caractérisée en ce qu'un convertisseur tension-fréquence (68) est intercalé en aval du capteur de course (26).

16. Machine selon une des revendications 1 à 15, caractérisée en ce qu'en aval du capteur de course (26), est intercalé un capteur de sens de rotation (71) au moyen duquel on peut reconnaître un segment de profil montant ou descendant de la lame (14).
